# DEMANDE DE BREVET EUROPEEN

(11) **EP 2 979 928 A1**
(43) Date de publication de la demande: **03.02.2016**
(21) Numéro de dépôt: 15179195.1
(22) Date de dépôt: 30.07.2015
(51) Int. Cl.: B60R 5/04

(54) **SYSTÈME DE RECOUVREMENT D'UN COMPARTIMENT À BAGAGES DE VÉHICULE AUTOMOBILE**

(30) Priorité: 31.07.2014 FR 1457449
(71) Demandeur: Cera APS, 51100 Reims (FR)
(72) Inventeur: Bonfils, Xavier, 51100 Reims (FR); Brillon, Eric, 51390 Rosnay (FR)
(74) Mandataire: Sayettat, Julien Christian

(57) **Abrégé**

L'invention concerne un système (1) comprenant un cache bagages (2) et deux parois (3) latérales solidaires de la caisse dudit véhicule, ledit cache-bagages comprenant : un rideau (4) souple rétractable, un dispositif de rappel (7) dudit rideau et une bavette (8) de rigidification pourvue de deux moyens d'emboitement (9) latéraux respectifs, chacune desdites parois comprenant un moyen d'emboitement réciproque (10), ledit système comprenant en outre deux liens (11) souples, chacun desdits liens comprenant une extrémité inférieure (12), associée latéralement de part et d'autre de ladite bavette, et une extrémité supérieure (13), associée à un point d'ancrage (14) respectif disposé sur une paroi (3) au-dessus du moyen d'emboitement réciproque (10) correspondant, la longueur desdits liens étant définie de manière à permettre un passage dudit rideau en configuration semi-déployée dans laquelle il s'incline, ladite bavette étant désolidarisée desdites parois, ledit bord arrière se déplaçant au-dessus dudit bord avant de manière à faciliter l'accès aux bagages, au moins l'une desdites extrémités étant associée de façon réversible pour permettre à un utilisateur de disposer ledit rideau en configuration enroulée par retrait desdits liens.

## Description

L'invention concerne un système de recouvrement d'un compartiment à bagages de véhicule automobile.

Il est connu de réaliser un système de recouvrement d'un compartiment à bagages de véhicule automobile, ledit système comprenant un cache bagages et deux parois latérales solidaires de la caisse dudit véhicule, ledit cache-bagages comprenant :
- un rideau souple rétractable comprenant un bord avant et un bord arrière,
- un dispositif de rappel dudit rideau associé audit bord avant, ledit dispositif comprenant un arbre d'enroulement et un ressort d'actionnement dudit arbre en enroulement, de sorte que ledit rideau soit mobile entre une configuration enroulée de rangement et une configuration déployée horizontale de recouvrement des bagages,
- une bavette de rigidification associée le long dudit bord arrière, ladite bavette étant pourvue de deux moyens d'emboitement latéraux respectifs,
chacune desdites parois comprenant un moyen d'emboitement réciproque respectif disposé en son extrémité arrière, de manière à permettre un maintien dudit rideau en configuration déployée.

Dans les réalisations connues, il peut être prévu, comme décrit par exemple dans le document EP-0 941 176, de prévoir que le système permette une mise du rideau en configuration semi-déployée dans laquelle il s'incline, le bord arrière du rideau se déplaçant au-dessus de son bord avant de manière à faciliter l'accès aux bagages.

Les agencements proposés présentent une certaine complexité, notamment de par l'utilisation de rails de guidage - peu esthétiques - des bordures latérales de la bavette.

L'invention a pour but de pallier cet inconvénient en proposant un agencement particulièrement simple et esthétique pour permettre une mise du rideau en configuration semi-déployée.

A cet effet, l'invention propose un système de recouvrement d'un compartiment à bagages de véhicule automobile, ledit système comprenant un cache bagages et deux parois latérales solidaires de la caisse dudit véhicule, ledit cache-bagages comprenant :
- un rideau souple rétractable comprenant un bord avant et un bord arrière,
- un dispositif de rappel dudit rideau associé audit bord avant, ledit dispositif comprenant un arbre d'enroulement et un ressort d'actionnement dudit arbre en enroulement, de sorte que ledit rideau soit mobile entre une configuration enroulée de rangement et une configuration déployée horizontale de recouvrement des bagages,
- une bavette de rigidification associée le long dudit bord arrière, ladite bavette étant pourvue de deux moyens d'emboitement latéraux respectifs,
chacune desdites parois comprenant un moyen d'emboitement réciproque respectif disposé en son extrémité arrière, de manière à permettre un maintien dudit rideau en configuration déployée, ledit système comprenant en outre deux liens souples, chacun desdits liens comprenant une extrémité inférieure, associée latéralement de part et d'autre de ladite bavette, et une extrémité supérieure, associée à un point d'ancrage respectif disposé sur une paroi au-dessus du moyen d'emboitement réciproque correspondant, la longueur desdits liens étant définie de manière à permettre un passage dudit rideau en configuration semi-déployée dans laquelle il s'incline, ladite bavette étant désolidarisée desdites parois, ledit bord arrière se déplaçant au-dessus dudit bord avant de manière à faciliter l'accès aux bagages, au moins l'une desdites extrémités étant associée de façon réversible pour permettre à un utilisateur de disposer ledit rideau en configuration enroulée par retrait desdits liens.

Dans cette description, les termes de positionnement dans l'espace (supérieur, inférieur, latéral, avant, arrière, horizontal,...) sont pris en référence au système disposé dans le véhicule.

Avec l'agencement proposé, on dispose d'un système particulièrement simple permettant une mise du rideau en configuration semi-déployée, l'inclinaison du rideau étant le résultat combiné de la façon dont sont disposés des liens et de la force de rappel du ressort qui exerce une traction dudit rideau vers l'avant.

Le déboitement des moyens d'emboitement et d'emboitement réciproque permet de désolidariser la bavette des parois.

Lorsque le rideau est amené en configuration semi-déployée, la bavette est simplement suspendue par les liens, sans aucune interaction avec les parois par des moyens tels que des rails de guidage tels que connus de l'art antérieur, qui sont de réalisation complexe et d'esthétique incertaine.

D'autres particularités et avantages de l'invention apparaîtront dans la description qui suit, faite en référence aux figures jointes, dans lesquelles :

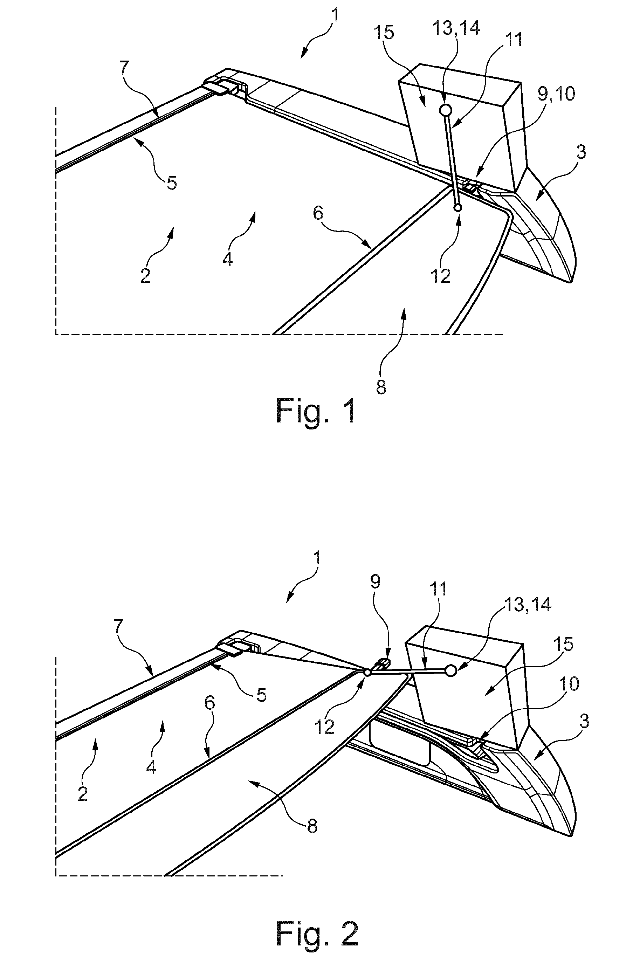

- la figure 1 est une représentation schématique partielle en perspective d'un système selon une réalisation, le rideau étant en configuration déployée,
- la figure 2 est analogue à la figure 1, le rideau étant en configuration semi-déployée.

En référence aux figures, on décrit un système 1 de recouvrement d'un compartiment à bagages de véhicule automobile, ledit système comprenant un cache bagages 2 et deux parois 3 latérales solidaires de la caisse dudit véhicule, ledit cache-bagages comprenant :
- un rideau 4 souple rétractable comprenant un bord avant 5 et un bord arrière 6,
- un dispositif de rappel 7 dudit rideau associé audit bord avant, ledit dispositif comprenant un arbre d'enroulement et un ressort, non représentés, d'actionnement dudit arbre en enroulement, de sorte que ledit rideau soit mobile entre une configuration enroulée de rangement et une configuration déployée horizontale de recouvrement des bagages,
- une bavette 8 de rigidification associée le long dudit bord arrière, ladite bavette étant pourvue de deux moyens d'emboitement 9 latéraux respectifs,
chacune desdites parois comprenant un moyen d'emboitement réciproque 10 respectif disposé en son extrémité arrière, de manière à permettre un maintien dudit rideau en configuration déployée, ledit système comprenant en outre deux liens 11 souples - par exemple sous forme de cordons tressés -, chacun desdits liens comprenant une extrémité inférieure 12, associée latéralement de part et d'autre de ladite bavette, et une extrémité supérieure 13, associée à un point d'ancrage 14 respectif disposé sur une paroi 3 au-dessus du moyen d'emboitement réciproque 10 correspondant, la longueur desdits liens étant définie de manière à permettre un passage dudit rideau en configuration semi-déployée dans laquelle il s'incline, ladite bavette étant désolidarisée desdites parois, ledit bord arrière se déplaçant au-dessus dudit bord avant de manière à faciliter l'accès aux bagages, au moins l'une desdites extrémités étant associée de façon réversible pour permettre à un utilisateur de disposer ledit rideau en configuration enroulée par retrait desdits liens.

On réalise en outre un enroulement partiel du rideau 4 lors de sa mise en configuration semi-déployée, ce qui rend l'accès au compartiment d'autant plus aisé.

Selon la réalisation représentée, les points d'ancrage 14 sont disposés sur les custodes arrière 15 du véhicule, lesdites custodes étant chacune comprise dans une paroi 3 respective.

Selon une réalisation, les liens 11 sont élastiques, ce qui permet, lors de la mise du rideau 4 en configuration semi-déployée, de réaliser un enroulement accru dudit rideau facilitant encore davantage l'accès au compartiment.

Selon une réalisation, le rideau 4 en configuration semi-déployée définit un angle minimum de 15° par rapport à l'horizontale.

Selon un mode de réalisation non représenté, au moins une extrémité 12,13 de lien 11 est sous forme d'une boucle recevant une saillie issue de la bavette 8 ou d'une paroi 3.

Selon un autre mode de réalisation non représenté, au moins une extrémité 12,13 de lien 11 est pourvue d'un embout en matériau plastique la surmoulant, ledit embout s'emboitant dans un moyen d'emboitement réciproque issu de la bavette 8 ou d'une paroi 3.

## Revendications

1. Système (1) de recouvrement d'un compartiment à bagages de véhicule automobile, ledit système comprenant un cache bagages (2) et deux parois (3) latérales solidaires de la caisse dudit véhicule, ledit cache-bagages comprenant :
• un rideau (4) souple rétractable comprenant un bord avant (5) et un bord arrière (6),
• un dispositif de rappel (7) dudit rideau associé audit bord avant, ledit dispositif comprenant un arbre d'enroulement et un ressort d'actionnement dudit arbre en enroulement, de sorte que ledit rideau soit mobile entre une configuration enroulée de rangement et une configuration déployée horizontale de recouvrement des bagages,
• une bavette (8) de rigidification associée le long dudit bord arrière, ladite bavette étant pourvue de deux moyens d'emboitement (9) latéraux respectifs,
chacune desdites parois comprenant un moyen d'emboitement réciproque (10) respectif disposé en son extrémité arrière, de manière à permettre un maintien dudit rideau en configuration déployée, ledit système étant **caractérisé en ce qu'**il comprend en outre deux liens (11) souples, chacun desdits liens comprenant une extrémité inférieure (12), associée latéralement de part et d'autre de ladite bavette, et une extrémité supérieure (13), associée à un point d'ancrage (14) respectif disposé sur une paroi (3) au-dessus du moyen d'emboitement réciproque (10) correspondant, la longueur desdits liens étant définie de manière à permettre un passage dudit rideau en configuration semi-déployée dans laquelle il s'incline, ladite bavette étant désolidarisée desdites parois, ledit bord arrière se déplaçant au-dessus dudit bord avant de manière à faciliter l'accès aux bagages, au moins l'une desdites extrémités étant associée de façon réversible pour permettre à un utilisateur de disposer ledit rideau en configuration enroulée par retrait desdits liens.

2. Système selon la revendication 1, **caractérisé en ce que** les points d'ancrage (14) sont disposés sur les custodes arrière (15) du véhicule, lesdites custodes étant chacune comprise dans une paroi (3) respective.

3. Système selon l'une des revendications 1 ou 2, **caractérisé en ce que** les liens (11) sont élastiques.

4. Système selon l'une quelconque des revendications 1 à 3, **caractérisé en ce que** le rideau (4) en configuration semi-déployée définit un angle minimum de 15° par rapport à l'horizontale.
